Europäisches Patentamt

(19) European Patent Office

Office européen des brevets

(11) Publication number : **0 448 324 A1**

(12) **EUROPEAN PATENT APPLICATION**

(21) Application number : 91302315.6

(22) Date of filing : 18.03.91

(51) Int. Cl.⁵ : **B31B 23/00,** B65D 30/00, B29C 51/10, B29C 51/18

(30) Priority : 23.03.90 US 498068

(43) Date of publication of application :
25.09.91 Bulletin 91/39

(84) Designated Contracting States :
AT BE CH DE DK ES FR GB GR IT LI LU NL SE

(71) Applicant : MOBIL OIL CORPORATION
3225 Gallows Road
Fairfax, Virginia 22037-0001 (US)

(72) Inventor : Herrington, Fox John
39 Michigan Street
Hobcomb, New York 14469 (US)
Inventor : Sharps, Gordon Vincent
106 Grand View Drive
Fairport, New York 14450 (US)

(74) Representative : Curtis, Philip Anthony
Patent Department, Mobil Court 3 Clements Inn
London WC2A 2EB (GB)

(54) A seamless thermoplastic bag, and an apparatus and method for making the same.

(57) Reusable seamless thermoplastic bags having a thickened reinforced upper edge and a body portion of substantially uniform thickness. An apparatus (26) and method for making such a bag has a continuous web of thermoplastic film (20) fed to a device which thermoforms the bag while maintaining the edge of the bag at a thickness substantially equal to the thickness of the film being provided, while forming a seamless bag having a uniform thickness. A circular, hollow clamp (28) secures the edge of the bag while the bag is being formed. The bag being formed extends through the area defined by a circular radiant heating element (32) which is positioned adjacent to and concentric with the clamp (28). Cooling fans are provided adjacent to the heating element (32) to cool the bag after it is formed.

Fig.3.

EP 0 448 324 A1

# A SEAMLESS THERMOPLASTIC BAG, AND AN APPARATUS AND METHOD FOR MAKING THE SAME

The present invention relates to a seamless thermoplastic bag, and an apparatus and method for making the same. More particularly the invention relates to a plastic bag having a reinforced or thickened edge extending about the bag opening, and more specifically the invention, pertains to a thin-walled seamless bag having a uniformed thickness at the walls defining the body of the bag, in which the thickened edge portion maintains the thickness of the thermoplastic sheet from which the bag was initially formed.

Plastic bags, such as those which are used for the storage of items like comestibles and other perishables, are well known in the art; arrangements for mass-producing these plastic bags are also known. In general, the sizes of these bags range from small sandwich-type bags to large disposable garbage and lawn bags; these bags may be equipped with a reinforced edge about the openings thereof to allow for the provision of various devices for securing the bag in an open or closed position. Arrangements or apparatus for forming these bags are also well known in the art, as well as various techniques employed in the manufacture of these items. The primary advantage of bags of this type resides in that they are lightweight and disposable in nature; however, the construction of these bags generally requires the formation of a seam along at least one edge of the bag, which necessitates the inclusion of an additional heat-sealing step during manufacture, which results in a weakened region which is susceptible to tearing and leaking of any liquid contents from the bag.

There are several known types of bags, and apparatus and methods for making such bags. The methods and apparatus incorporate various techniques for forming the bags, and the resulting bags, although generally similar in shape, each possess inherently different constructional aspects which are subject to disadvantages encountered during the manufacture and use of these bags, which in many instances inconvenience the consumer during use of these bags.

US-A-3,175,027 discloses a method of producing plastic film caps or covers each incorporating an elastic edge which is formed by heating the edge of a circular plastic film in a manner whereby the edge shrinks and consequently thickens to the extent that the thickened edge may be up to ten times the thickness of the remaining regions of the film. As the edge shrinks, it draws the circular film into a cap-shaped article, and the resilient properties of the plastic material from which the cap is constructed causes the shrunken edge to assume a certain elasticity capable of repeatedly stretching and retracting. The cap-shaped article formed pursuant to this publication would not be suitable for use as a plastic storage bag since the shrinking of the thickened edge produces a distortion in the remainder of the material, especially in case the edge is overheated.

US-A-2,760,233 relates to a method for forming plastic sheet articles into possibly three different planes. A layer or layers of a synthetic resinous material is polymerized to form a sheet. The sheet is then shaped through heated fluidized pressure to form an article which is eventually intended to be used as a specialized plastic laminate in an aircraft. The outer edge of the polymerized material is tightly gripped in a pressure forming apparatus such that the heated fluid softens the material which if then chaped upon the application of pressure. This particular patent discloses the use of forming or shaping rigid plastic articles through the application of fluid pressure for use as high-strengh materials in aircraft.

US-A-3,149,017, relates to the fabrication of large polyethylene balloons for use in meteorological studies. Each balloon is formed from a lay-flat preform having heat-sealed or fused edges; the preform is irradiated, and thereafter the balloon is shaped through hot blowing. The result is a balloon having a longitudinal seam which is of a greatly enlarged size.

US-A-2,377,946, discloses a method and apparatus for forming thermoplastic articles having a substantially uniform thickness from a thermoplastic sheet. A sheet of thermoplastic material is clamped across the opening of a negative die and subjected to non-uniform infrared radiation which heats the plastic material prior to vacuum forming an article therein. The edge of the material is heated to a greater extent than the remaining portions or regions of the material so as to compensate for the fact that less stretching is imparted to the central portion of the film in order to maintain the uniformed thickness of the entire surface of the article after the shaping of the molded object.

The manufacturing apparatus disclosed in the prior art, and the thermoplastic articles formed by these apparatus, are subject to several disadvantages which substantially adversely affect both the performance of the resulting formed article as well as the cost-effectiveness of manufacture of these formed articles. Several of the prior art publications disclose articles such as bags having at least one seam, wherein the seam by its nature is inherently weaker than the remaining regions of the body of the article. The seam generally requires reinforcement in order to maintain the edges of the material together so as to avoid splitting thereof.

Furthermore, the formation of the seam generally requires an additional step during manufacture, in that the seam is generally formed by an additional heat sealing procedure. This heat-sealing, in turn may lead to shrinkage of the surrounding material, leaving an unsightly apperance at the locations the surrounding plastic material is draw towards the heat seal.

Additionally, prior art bags and similar molded articles which may be formed without seams still are subject to the disadvantage of having weak spots in the body of the bag, due to the development of regions of unequal thickness during the forming of the bag. Consequently, these regions are easily susceptible to stretching and tearing when the bag is filled with product. Furthermore, in bags or articles having uniform thickness, reinforcement of these regions is required, as well as in regions such as proximate the opening of the bag which requires additional strength during handling by a user. These bags are usually expensive in view of the aspect that additional plastic material must be employed inorder to reinforce these regions. Consequently, an excessive amount of plastic is necessitated for each bag, thus rendering the bags expensive to manufacture.

The present invention eliminates or substantially ameliorates the disadvantages encountered in the prior art through the provision of an inexpensive reusable, seamless bag formed from a single sheet of thermoplastic film material, and incorporating a reinforced edge about the opening of the bag.

In accordance with one aspect of the invention there is provided a thin-walled bag constituted from a thermoplastic film material, said bag comprising a seamless body having one closed end and a thickened upper edge encompassing an open end of said body, said edge having a thickness of substantially 1.5 to 10 times the thickness of said body.

In accordance with another of the invention there is provided a thin-walled being constituted from a thermoplastic film matlerial, said bag comprising a seamless body having one closed end and a thickened upper edge encompassing an open end of said body, the thickened upper edge having a thickness substantially equal to the original thickness of the thermoplastic film material prior to the formation of the bag.

The seamless bag possesses a substantially uniform thickness over its entire body. The reinforced upper edge can accommodate an arrangement for opening and closing the bag. The seamless bag is imparted a durability and integrity which is exceptional in nature, while being inexpensive to manufacture. The thermoplastic film material used to form the bag is preferably transparent and remains so after forming the bag; and the bag can be formed in sizes suitable to accommodate the storing of perishables, such as comestibles, in volumes of, for example, between a pint and a gallon. The durability of the bag allows the bag to be reusable, and the reinforced edge facilitates opening and closing of the bag without damaging the latter.

The apparatus for forming the bags of the present invention, and the method for forming the bag, allow for the implementation of manufacturing process which operates in an efficient and cost-effective manner.

Thus, according to another aspect of the invention there is provided a method of preparing a seamless bag constituted from a thermoplastic film material, comprising: securing a circular sheet of said thermoplastic film material in a hollow circular clamp means encompassing a perimetral edge of said sheet; thermoforming said sheet to form said bag while simultaneously heating said bag about an outer surface thereof; and cooling said bag subsequent to said thermoforming and heating step so as to cool and stabilize said bag whereby said bag maintains a thickness along said edge equal to the original thickness of said sheet.

According to a further aspect of the invention there is provided apparatus for preparing a seamless bag from a thermoplastic film material, comprising: feed means for supplying a sheet of said thermoplastic material; clamping means having a hollow circular opening for securing said sheet, said clamping means further including cutting means for cutting said sheet into circular films; thermoforming means for thermoforming said bag from said sheet; heating means for radiantly heating said bag during thermoforming, said heating means being circularly positioned adjacent said clamping means about an outer surface of said bag; and cooling means positioned adjacent said heating means for cooling said bag during thermoforming whereby said bag is formed having an upper perimetral edge of a thickness greater than the thickness of the body of said bag.

The present invention provides a reusable seamless bag which is inexpensive and lightweight in its construction, yet durable due to its substantially uniform thickness.

The bag according to the present invention obviates the problems associated with the prior art bags and thermally formed articles of this nature by providing a reinforced edge without the need for increasing the amount of plastic material used, while providing a seamless bag having a generally uniform thickness throughout the body portion of the bag. The apparatus for forming such a bag ensures the presence of a uniformity of thickness throughout the body of the bag while maintaining the original thickness of the sheet or film portions employed to form the bag at the upper edge surrounding the opening of the bag. The bag is simple in construction and relatively inexpensive to manufacture, thereby effectively forming a strong and reliable reusable bag. Reusability is, of course, a primary consideration inasmuch as, although the bag must be relatively inexpensive to manufacture, use of the bag by the consumer in storing perishable items requires that the bag have a sufficient life expectancy allowing for possible reuse.

Reference is now made to the accompanying drawings in which:

Figure 1 illustrates a perspective view of a seamless thermoplastic bag pursuant to the present invention;

Figures 2a and 2b illustrate cutaway views of two embodiments of the upper edge of the bag taken along line 2-2 in Fig. 1;

Figure 3 is a front elevation, diagrammatic in form, of an embodiment of a device pursuant to the present invention for forming a bag of the type according to Figure 1; and

Figure 4 is a perspective partially cut-away view of a bag being formed in the apparatus of Figure 3.

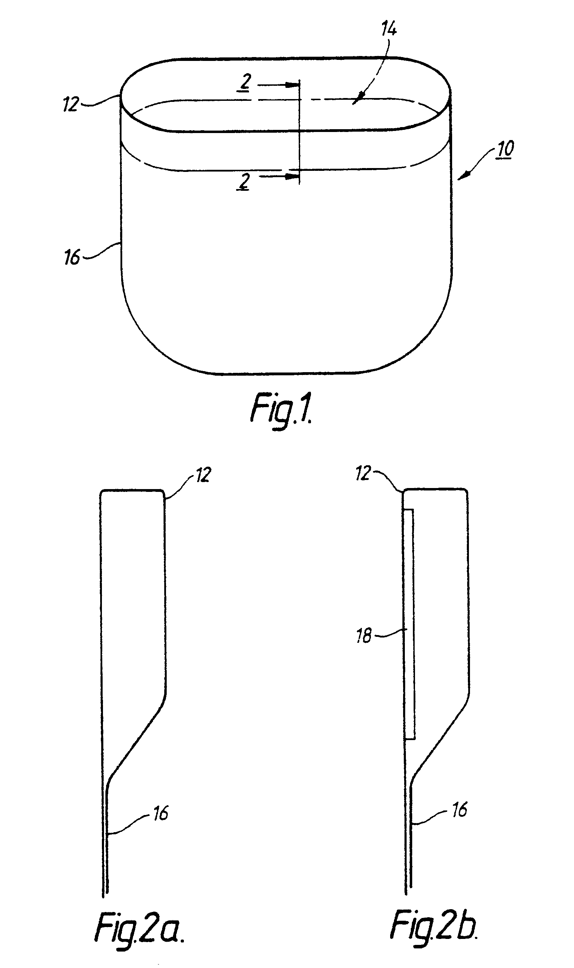

Referring now in specific detail to the drawings, wherein identical reference numerals identify similar or identical elements throughout the several viws, Figure 1 shows a reusable seamless thermoplastic bag 10 according to the present invention. Bag 10 is formed by conventional blow molding or vacuum forming techniques, and has a thickened upper edge 12 at the bag opening 14 thereof which reinforces bag 10 and provides a device for opening and closing the bag. The body 16 of the bag 10 is completely seamless, and has a substantially uniform thickness which adds stability and strength to the bag. Upper edge 12 has a thickness which may be up to approximately ten times greater than the thickness of the bag body 16 and, moreover, the edge 12 has approximately the same thickness as the original web of thermoplastic film from which the bag is formed. During thermoforming, edge 12 maintains approximately the same thickness as the web of thermoplastic material from which the bag is formed, while the body 16 is stretched and formed during thermoforming so that its thickness is substantially decreased. The ratio in the thicknesses between the edge relative to the body of the bag is approximately within the range of 10 to 1.5 such that, pursuant to a preferred embodiment, the edge remains at a thickness of approximately 10 mil (0.25mm), whereas the body of the bag is reduced to a thickness of approximately 1.5 mil (0.038mm).

Figures 2a and 2b show the upper edge 12 of the bag 10 in a cutaway view taken along line 2-2 in Fig. 1. The embodiment of Figure 2a shows edge 12 being substantially thicker than body 16, whereas that of Figure 2b shows the addition of a reinforcing rib or band 18 which is used to aid in the opening and closing of the bag 10. The band 18 may be a stainless steel band which is secured to edge 12 by either heat, adhesives, or the like, or may include such devices as draw-strings or closure ties. Furthermore, band 18 may incorporate an additional reinforcing strip of plastic material, or may also include grooves or protrusions employed for closing the opening 14 of the bag 10 in a lock-tight manner.

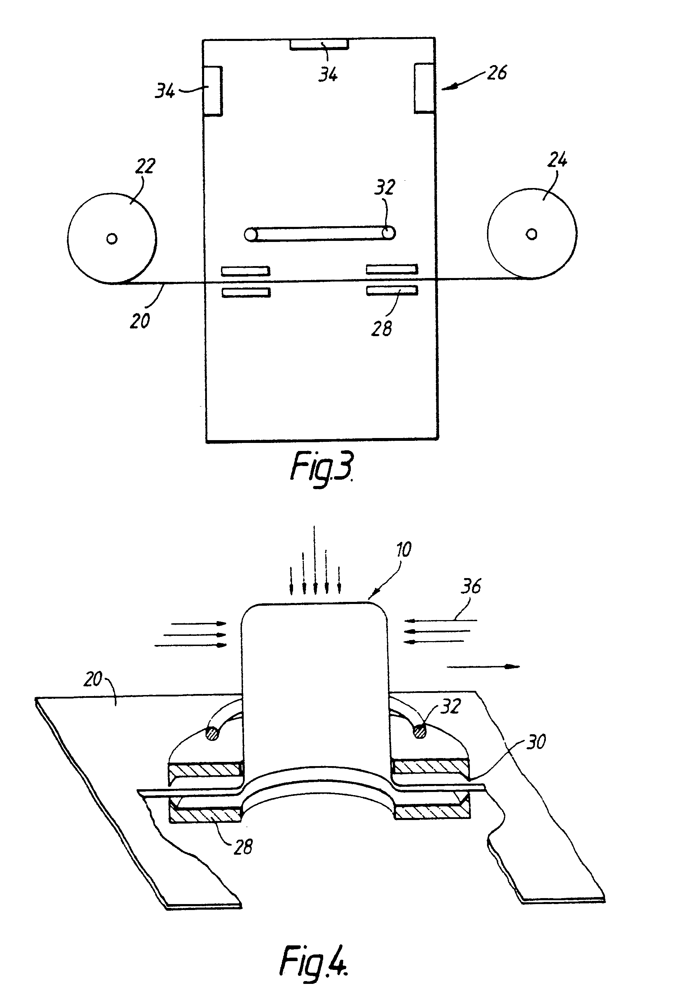

Figure 3 shows an apparatus according to the present invention for forming the bag of Figure 1. A continuous roll of thermoplastic film material 20, such as polyethylene or polypropylene, is supplied from a supply reel 22 and advanced through a thermoforming apparatus or device 26 for forming seamless bags 10. A take-up reel 24 is provided for the rewinding of film 20 after formation of the bag 10. Thermoforming apparatus 26 not only a conventional vacuum forming device or blow molding device, but also includes an arrangement for maintaining the uniformity in the thickness of the bag which is being formed. The arrangement comprises a hollow circular clamp 28 which secures and holds the film 20 during the thermoforming operation and a heater and cooling fan operable during the thermoforming operation. The clamp 28 may be constructed from any suitable material, but preferably is of a material which will not stick to the film 20 after completion of the thermoforming operation. Clamp 28 is preferably provided with a cutting device 30, as shown in Figure 4, so that subsequent to the thermoforming operation, the resulting bag may be cut and removed from the film 20. Thermoforming device 26 is further provided with a circular radiant heating element 32, which is positioned adjacent to and concentric with clamp 28. The heating element 32 is positioned on a side of the clamp 28 towards which the bag is formed; this arrangement ensures that the greatest amount of heating will take place about the edge of the film, where the film tends to be thickest, so that the heating is less intense at the centre of the film. Positioned adjacent to the heating element 32, but remote from clamp 28, are suitable air circulating devices 34, which are generally constructed from fans or blowers. Radiant heating element 32 preferably comprises a resistive coil element, but may also also comprise any radiant heater, such as a quartz-type heater.

Figure 4 shows a bag 10 in the process of being formed in the thermoforming apparatus or device 26, in which the film 20 is conveyed into the device and secured within the clamp 28. As the bag is formed, it extends within the area defined by the circular radiant heating element 32 so that the bag is heated as it expands and stretches. As the bag stretches, the film is cooled by air, as shown at 36, supplied from air-circulating devices 34; the devices 34 are positioned adjacent the heating element 32 and distant from clamp 28. The cooling air adds stability to the bag during the forming process as described below. After thermoforming, cutting device 30 cuts the formed bag so as to release it from the clamp 28. The film is then advanced in the direction of arrow A in order to allow for the forming of a successive bag.

During operation, the supply roll 22 feeds the thermoplastic film 20 into the thermoforming apparatus 26. While only one apparatus 26 is shown, it is understood that several thermoforming devices may be provided in succession or tandem arrangement in order to be able to manufacture a multiplicity of bags simultaneously. The film 20 passes through the clamp 28, the latter of which is circular and hollow, and the bag 10 may be formed by conventional vacuum forming or blow molding techniques. However, as the bag is being formed, it extends within the area formed by the circular heating element 32 whereby the bag is heated around the edge thereof where the film tends to be at its thickest. The center of the film, which is stretched and consequently becomes thinner than the remaining portions of the bag, is maintained at a temperature which is less than that encountered at the edges due to the heating element 32. Conventional thermoforming techniques are subject to the disadvantage in that the film tends to become thinner near the center of the circular sheet portion which is being formed, because at this location the film is stretched to its maximum extent.

The present invention overcomes this problem by heating the bag being blown with the circular radiant heating element 32 located near the clamp, as is best ascertained in Figure 4. Element 32 heats the bag extensively around the edge where the film tends to be its thickest, and the center of the bag receives less radiant heat after the blowing begins. During stretching, the film is cooled by air from the air circulators 34, which may commonly consist of a fan or duct-type system, and which stabilizes the bag as the letter stretches. Thin spots on the film are cooled at a more rapid rate cause of the air flow, so as to thereby lower the temperature at that location and rendering the film stiffer and more resistant to stretching. This aspect tends to correct for any variations encountered in the film and, as a result, imparting a substantially more uniform thickness to the bag.

The clamp 28 itself, as well as the ratio of the film 20 which is secured within the clamp 28, remains relatively cool in comparison with the reminder of the bag being formed, and as a result thereof, the film of that location substantially maintains its original thickners. Accordingly, the formed bag has a "thickened portion" produced at its opening which resists tearing and allows for the precision of a closure means (such as bond 18) to secure the bag.

## Claims

1. A thin-walled bag constituted from a thermoplastic film material, said bag comprising a seamless body having one closed end and a thickened upper edge encompassing an open end of said body, said edge having a thickness of substantially 1.5 to 10 times the thickiness of said body.

2. A bag according to claim 1, wherein said body has a thickness of substantially 1.5 mil (0.038mm).

3. A bag according to claim 2, wherein said edge has a thickness of substantially 10 mil (0.25mm).

4. A bag according to Claim 1, 2 or 3, wherein said edge includes means for sealingly closing said bag.

5. A bag as according to claim 4, wherein said edge closing means includes an interlocking closure and/or flexible metal band.

6. A bag according to any preceding claim, wherein the thickness of said upper edge is substantially equal to the original thickness of the thermoplastic film material prior to the formation of the bag.

7. A bag according to any preceding claim, wherein said edge is sufficiently rigid to maintain said bag in an open or closed position.

8. A bag according to any preceding claim, wherein said bag has a volume of between one pint and one gallon.

9. A bag according to any preceding claim, wherein said thermoplastic material is selected from the group consisting of polypropylene and polyethylene.

10. A method of preparing a seamless bag constituted from a thermoplastic film material, comprising:

    securing a circular sheet of said thermoplastic film material in a hollow circular clamp means encompassing a perimetral edge of said sheet;

    thermoforming said sheet to form said bag while simultaneously heating said bag about an outer surface thereof;

    and cooling said bag subsequent to said thermoforming and heating step so as to cool and stabilize said bag whereby said bag maintains a thickness along said edge equal to the original thickness of said sheet.

11. A method according to claim 10, wherein said thermoforming step comprises thermally blowing said sheet through said hollow circular clamp means at a central location on said circular sheet.

12. A method according to claim claim 10, wherein said thermoforming step comprises thermally vacuum-forming said bag.

13. A method according to claim 10, 11 or 12 wherein said heating step comprises radiantly heating said thermoformed bag through a circular radiant heating means positioned adjacent said clamp means the outer surface of said bag.

14. A method according to any of claims 10 to 13, wherein said cooling step comprises exposing said bag to a cooling atmosphere.

15. A method according to claim 14, wherein said cooling step comprises circulating air about said bag.

16. Apparatus for preparing a seamless bag from a thermoplastic film material, comprising:
feed means for supplying a sheet of said thermoplastic material;
clamping means having a hollow circular opening for securing said sheet, said clamping means further including cutting means for cutting said sheet into circular films;
thermoforming means for thermoforming said bag from said sheet;
heating means for radiantly heating said bag during thermoforming, said heating means being circularly positioned adjacent said clamping means about an outer surface of said bag;
and cooling means positioned adjacent said heating means for cooling said bag during thermoforming whereby said bag is formed having an upper perimetral edge of a thickness greater than the thickness of the body of said bag.

17. Apparatus according to claim 16, wherein said thermoforming means comprises a thermal blowing device for blow molding said bag.

18. Apparatus according to claim 16, wherein said thermoforming means comprises a thermal vacuum-forming device for vacuum forming said bag.

19. Apparatus according to claim 16, 17 or 18 wherein said heating means concentrically encompasses said bag during thermoforming, said heating means comprising a resistive heating element for radiantly heating said bag during thermoforming.

20. Apparatus according to claim 16, 17, 18, or 19, wherein said heating means is a quartz-type heater.

21. Apparatus according to any of claims 16 to 20, wherein said cooling comprises at least one fan for cooling said thermoformed bag.

22. A thin-walled being constituted from a thermoplastic film matlerial, said bag comprising a seamless body having one closed end and a thickened upper edge encompassing an open end of said body, the thickened upper having a thickness substantially equal to the original thickness of the thermoplastic film material prior to the fomration of the bag.

Fig.1.

Fig.2a.

Fig.2b.

Fig.3.

Fig.4.

European Patent Office

**EUROPEAN SEARCH REPORT**

Application Number

| | DOCUMENTS CONSIDERED TO BE RELEVANT | | EP 91302315.6 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | EP - A2 - 0 168 702 (FRICK) * Abstract * -- | 1,4,7, 8 | B 31 B 23/00 B 65 D 30/00 B 29 C 51/10 B 29 C 51/18 |
| A | DE - A1 - 3 211 200 (ANATROS CORP.) * Figures; abstract * -- | 1,10, 22 | |
| A | US - A - 4 666 394 (WAKAMIYA et al.) * Claim 1; fig. 6a-6g * -- | 10,11, 13,14, 16,17 21 | |
| A | US - A - 4 668 175 (MARTIN) * Claims 1,2; fig. 3,4,5 * -- | 10,12 16,17 18 | |
| D,A | US - A - 3 149 017 (EHRREICH) * Figures; claims * -- | 1,10, 11,14, 15,22 | **TECHNICAL FIELDS SEARCHED (Int. Cl.5)** |
| D,A | US - A - 2 377 946 (LEARY) * Totality * -- | 10,11, 14,15, 16,17 | B 29 C 51/00 B 31 B 19/00 B 31 B 21/00 |
| D,A | US - A - 3 175 027 (HARRISON) * Totality * ---- | 1,10, 11,12, 14,15 | B 31 B 23/00 B 31 B 41/00 B 65 D 30/00 B 65 D 33/00 |

The present search report has been drawn up for all claims

| Place of search | Date of completion of the search | Examiner |
|---|---|---|
| VIENNA | 29-05-1991 | RIEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document